# EUROPÄISCHE PATENTSCHRIFT

(11) **EP 3 002 856 B1**
(45) Veröffentlichungstag und Bekanntmachung des Hinweises auf die Patenterteilung: **21.06.2017**
(21) Anmeldenummer: 15188143.0
(22) Anmeldetag: 02.10.2015
(51) Int. Cl.: H02K 7/116, B25J 15/00, B25J 15/02, B65G 47/90, B25J 9/12, H02K 7/06, H02K 7/102, H02K 11/21

(54) **GREIF- ODER SCHWENKEINHEIT**
GRIPPING OR SWIVEL UNIT
UNITE DE PREHENSION OU PIVOTANTE

(30) Priorität: 02.10.2014 DE 102014220110
(43) Veröffentlichungstag der Anmeldung: 06.04.2016
(73) Patentinhaber: Schunk GmbH & Co. KG Spann- und Greiftechnik, 74348 Lauffen am Neckar (DE)
(72) Erfinder: STANICKI, Andreas, 74226 Nordheim (DE); HAAG, Matthias, 74360 Ilsfeld (DE)
(74) Vertreter: DREISS Patentanwälte PartG mbB

(56) Entgegenhaltungen:
- EP-A2- 2 532 927
- DE-A1-102009 016 854
- DE-U1- 29 912 409
- JP-A- 2010 121 654

## Beschreibung

Die Erfindung betrifft eine Greif- oder Schwenkeinheit, mit einem Gehäuse, mit einem im Gehäuse drehbar gelagerten Drehglied, das mit wenigstens einer Greifbacke oder einem Drehteller gekoppelt ist, mit einem im Gehäuse vorgesehenen Elektromotor, der einen drehfesten Stator und einen drehbar gelagerten Rotor umfasst, mit einem mit dem Rotor verbundenen Getriebe, welches eine mit dem Drehglied gekoppelte Abtriebswelle aufweist.

Aus dem vorbekannten Stand der Technik sind Greif- oder Schwenkeinheiten bekannt, welche Elektromotoren aufweisen, welche wiederum ein Getriebe antreiben. Da mit den Greif- oder Schwenkeinheiten vergleichsweise große Kräfte übertragen werden müssen, sind die Elektromotoren beziehungsweise die zugehörigen Getriebe entsprechend auszulegen. Auf Grund größeren Belastungen, kommt es zu nicht unerheblichen Erwärmungen im Elektromotor, insbesondere auf Grund des durch die Wicklungen des Elektromotors fliesenden Ströme.

Aus der EP 2 351 197 B1 ist beispielsweise eine Elektro-Getriebe-Einheit vorbekannt, bei der ein Getriebe innerhalb einer Rotorwicklung angeordnet ist, wobei der Rotor Wicklungen trägt und der Stator zwischen dem Getriebe und dem Rotor angeordnet ist. Bei dieser Einheit wird ein Bürsten aufweisender Elektromotor verwendet, wobei die Bürsten den Strom auf den rotierenden, die Wicklungen aufweisenden Rotor übertragen. Zwischen dem rotierenden Rotor und dem Gehäuse ist dabei zwangsweise ein Luftspalt vorgesehen, so dass eine Rotation ermöglicht wird. Derartige Elektro-Getriebe-Einheiten haben zum einen den Nachteil, dass sie nicht dazu geeignet sind, Greif- oder Schwenkbewegungen zu realisieren, da bei Greif- oder Schwenkbewegungen stets eine Bewegung zwischen zwei Endlagen realisiert werden muss. Bei einem derart vorbekannten Motor erfolgt bei schnellen und wiederholten Hin- und Herbewegungen des Rotors ein schnelles Abbrennen der Bürsten. Zudem kann auf Grund der rotorseitigen Wicklungen die auf Grund des Stromdurchflusses entstehende Wärme vergleichsweise schlecht aus dem Gehäuse abgeführt werden.

Aus der EP 2 532 927 EP ist eine Vorrichtung mit Merkmalen des Oberbegriffs des Anspruchs 1 bekannt.

Aus der DE 299 12 409 U1 ist andere Dreh- oder Schwenkvorrichtung bekannt. Die DE 10 2009 016 854 A1 offenbart eine Motorgetriebeeinheit.

Der vorliegenden Erfindung liegt die Aufgabe zu Grunde, eine Greif- oder Schwenkeinheit bereitzustellen, mit der zuverlässig Greifbacken oder Drehteller zwischen jeweiligen Endlagen hin und her angetrieben werden können, wobei zudem eine sichere Abfuhr der vom Elektromotor erzeugten Wärme gewährleistet wird, wobei die Einheit vergleichsweise kompakt bauen und dennoch funktionsloser arbeiten soll.

Diese Aufgabe wird mit einer Greif- oder Schwenkeinheit mit den Merkmalen des Anspruchs 1 gelöst. Folglich wird vorgesehen, dass der Stator den Rotor in radialer Richtung umgibt und Wicklungen aufweist, dass der Rotor mit den Wicklungen zusammenwirkende Permanentmagnete umfasst und hohl ausgebildet ist, und dass das Getriebe in dem vom Rotor gebildeten Hohlraum angeordnet ist. Auf Grund dieser Anordnung ist es möglich, einen bürstenlosen Elektromotor zu realisieren. Ein Abbrennen von Bürsten kann damit nicht stattfinden. Ferner kann durch die radial außen liegende Anordnung des Stators die von den statorseitigen Wicklungen erzeugte Wärme unmittelbar, also ohne Vorsehen eines Luftspaltes, in das den Stator radial umgebende Gehäuse, oder eines Gehäuseteils, abgeleitet werden. Einer ungewollten Überhitzung kann folglich entgegengewirkt werden. Der Stator weist zudem vorzugsweise einen Kern aus einem weichmagnetischen Material auf.

Gemäß der Erfindung ist zudem vorgesehen, dass der Rotor einen Rotorboden und einen umlaufenden Rotormantel aufweist, wobei am Rotorboden ein in den vom Rotormantel umschlossenen Hohlraum ragender Wellenabschnitt vorgesehen ist, der mit einem Eingangsglied des Getriebes zusammenwirkt. Der Wellenabschnitt kann dabei einstückig mit dem Rotor ausgebildet sein. Der Wellenabschnitt kann allerdings auch als Extrabauteil, das mit dem Rotor drehgekoppelt ist, ausgebildet werden. Für den Fall, dass als Getriebe ein Umlaufrädergetriebe, insbesondere ein Planetengetriebe, Verwendung findet, kann der Wellenabschnitt beziehungsweise das Eingangsglied als Sonnenrad des Getriebes ausgebildet sein.

Ferner ist erfindungsgemäß vorgesehen, dass am Rotorboden ein dem Hohlraum abgewandter Wellenabschnitt vorgesehen ist, der mit einer Bremseinrichtung zusammenwirkt. Die Bremseinrichtung kann insbesondere als magnetische Bremseinrichtung ausgebildet sein, die bei Bestromung, oder bei Nichtbestromung, eine bremsende Kraft auf den Wellenabschnitt oder auf ein an dem Wellenabschnitt vorgesehenen Bremsflansch bewirkt.

Der Wellenabschnitt, der in den Hohlraum ragt, kann dabei einstückig mit dem Wellenabschnitt, der dem Hohlraum abgewandt ist, ausgebildet sein.

Ferner ist denkbar, dass der dem Hohlraum abgewandte Wellenabschnitt mit einer Drehwinkelmesseinrichtung zusammenwirkt. Der Wellenabschnitt kann dazu eine Drehmessscheibe vorsehen, die von einem Drehmesssensor zur Bestimmung des Drehwinkels abgetastet wird.

Insbesondere kann das Getriebe, wie bereits erwähnt, als ein- oder mehrstufiges Umlaufrädergetriebe, insbesondere als Planetengetriebe, ausgebildet sein. Das Getriebe wird dabei vorteilhafterweise vollständig vom Rotormantel umgeben. Denkbar ist allerdings auch, dass Getriebeabschnitte sich in axialer Richtung über den Rotormantel hinaus erstrecken.

Zur sicheren Verankerung des Stators im Gehäuse der Greif- oder Schwenkeinheit ist denkbar, dass ein Trägerteil vorgesehen ist, an dem der Stator und drehfeste Teile des Getriebes angeordnet sind, und/oder an dem der Rotor drehbar gelagert ist. Eine Lagerung kann beispielsweise mittels Wälzlagern realisiert sein. Die Wälzlager können dabei entweder unmittelbar am Rotor und/oder unmittelbar an einem Wellenabschnitt, der am Rotorboden vorgesehen ist, angreifen.

Weitere Vorteile und vorteilhafte Ausgestaltungen der Erfindung sind der nachfolgenden Beschreibung zu entnehmen, anhand derer die in den Figuren dargestellten Ausführungsbeispiele der Erfindung näher beschrieben und erläutert sind.

Es zeigen:
- Figur 1: eine perspektivische Ansicht einer Erfindungsgemäßen Greifeinheit;
- Figur 2: die Greifeinheit gemäß Figur 1 ohne Außengehäuse;
- Figur 3: einen Schnitt durch die Einheit gemäß Figur 1 und 2 entlang der Ebene III in Figur 1;
- Figur 4: eine Vormontagebaugruppe, wie sie in der Einheit gemäß Figur 1 bis 3 Verwendung findet in perspektivischer Ansicht;
- Figur 5: die Unteransicht der Baugruppe gemäß Figur 4; und
- Figur 6: einen Schnitt durch die Baugruppe gemäß Figur 4 und 5 entsprechend der Figur 3 um 180° gedreht.

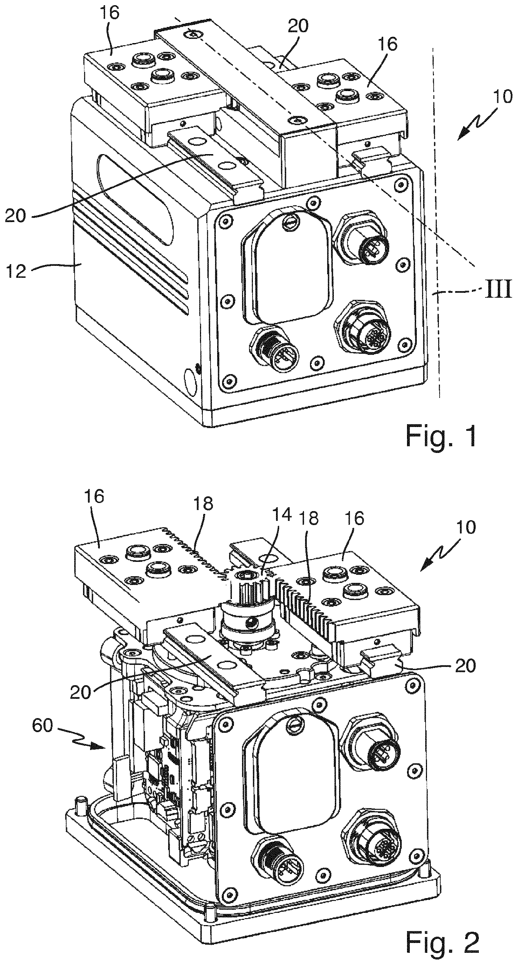

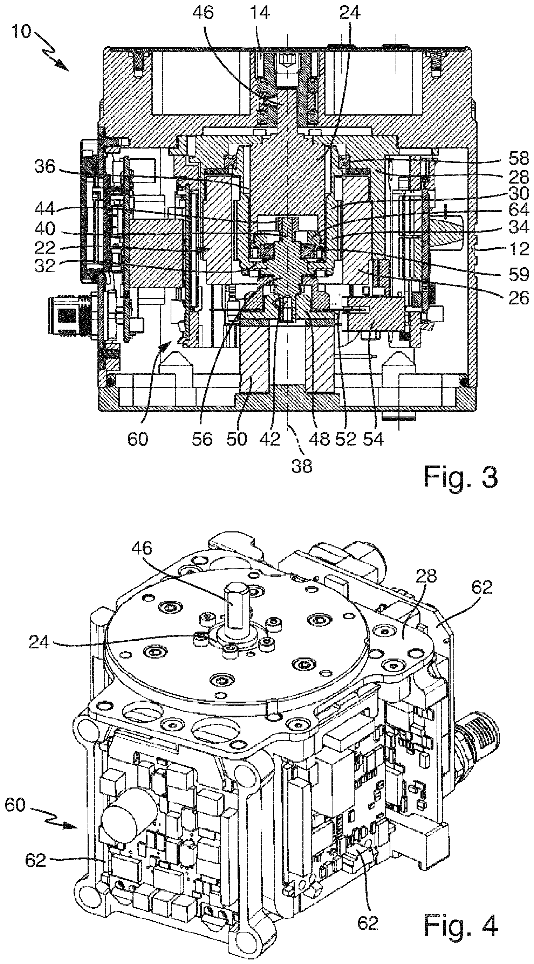

In den Figuren 1 bis 3 ist eine Greifeinheit 10 dargestellt, wobei innerhalb eines in Figur 1 gezeigten Außengehäuses 12 ein in Figur 3 deutlich zu erkennendes Drehglied 14 vorgesehen ist, das zwei parallel zueinander bewegbar angeordnete Greifbacken 16 antreibt. Wie aus Figur 2 deutlich wird, ist das Drehglied 14 als Ritzel ausgebildet, das an den einander zugewandten Seiten der Greifbacken 16 vorgesehene Zahnstangensegmente 18 kämmt. Zur Führung der Greifbacken 16 sind Führungsschienen 20 vorgesehen.

An den Greifbacken 16 sind in den Figuren nicht gezeigte Greiffinger befestigbar, mit welchen handzuhabende Gegenstände gegriffen werden können.

Innerhalb des Gehäuses 12 ist ein Elektromotor 22 vorgesehen, mit dem das Drehglied 14 über ein in Figur 3 schematisch dargestelltes Getriebe 24 antreibbar ist.

Wie aus Figur 3 deutlich wird, weist der Elektromotor 22 einen Stator 26 auf, der an einem gehäuseseitigen Trägerteil 28 befestigt ist. Das Trägerteil 28 ist dabei seinerseits am Außengehäuse 12 angeordnet.

Der Stator 26 als solcher wird gebildet aus einem weichmagnetischen Material mit Wicklungen, die zum Antrieb des Motors 22 entsprechend bestromt werden. Der Stator 26 liegt vorteilhaftweise großflächig am Trägerteil 28 an, so dass bei Bestromung der Wicklungen entstehende Wärme über das Trägerteil 28 abgeführt werden kann.

Der Stator 26 umgibt in radialer Richtung einen Rotor 30, der mit den statorseitigen Wicklungen zusammenwirkende Permanentmagnete aufweist oder aus diesen gebildet ist. Der Rotor 30 ist insgesamt becherartig aufgebaut und weist einen Rotorboden 32 sowie einen im Wesentlichen rotationssymmetrisch ausgebildeten Rotormantel 34 auf. Innerhalb dem vom Rotor 30 umgebenen Hohlraum 36 ist das Getriebe 24 angeordnet, das als mehrstufiges Umlaufrädergetriebe ausgebildet ist.

Dadurch, dass es sich bei dem beschriebenen Elektromotor 22 um eine bürstenlosen Motor handelt, bei dem folglich der Rotor 30 keine Wicklungen vorsieht, eignet sich der Motor dazu, auch oszillierende Bewegungen durchzuführen. Die Drehachse des Motors 22 ist in Figur 3 mit dem Bezugszeichen 38 gekennzeichnet.

Wie aus Figur 3 deutlich wird, sind am Rotorboden 32 zwei entlang der Drehachse 38 verlaufende Wellenabschnitte 40 und 42 vorgesehen.

Der Wellenabschnitt 40 ragt dabei in den vom Rotor 30 umgebenen Hohlraum 36 und weist an seinem freien Ende ein als Ritzel ausgebildetes Eingangsglied 44 auf, welches das Getriebe 24 antreibt. Auf der Ausgangsseite des Getriebes 24 ist eine Abtriebswelle 46 vorgesehen, an welcher letztlich das Drehglied 14 drehfest angeordnet ist.

Der Wellenabschnitt 42 ist auf der dem Hohlraum 36 abgewandten Seite des Rotorbodens 32 vorgesehen. Am Wellenabschnitt 42 ist zum einen ein Bremsflansch 48 angeordnet, der mit einer gehäuseseitigen Bremseinrichtung 50 zusammenwirkt. Bei Bestromung der Bremseinrichtung 50 ist der Bremsflansch 48 vorzugsweise frei drehbar; bei Nichtbestromung, insbesondere bei Stromausfall, tritt eine vorzugsweise magnetische Bremswirkung ein.

Zum anderen ist am Flanschabschnitt 42 eine Drehwinkelmessscheibe 52 vorgesehen, die mit einer Drehwinkelmesseinrichtung 54, welche am Trägerteil 28 angeordnet ist, zur Messung des Drehwinkels des Rotors 30 zusammenwirkt.

Die beiden Wellenabschnitte 40 und 42 werden von einem gemeinsamen Bauteil 56 gebildet, welches mit dem Rotor 30 verschraubt ist, beziehungsweise welches wenigstens abschnittsweise den Rotorboden 32 bildet.

Im Betrieb der Greifeinheit 10 werden die Wicklungen des Stators 26 bestromt, so dass der Rotor 30 in Drehbewegung versetzt wird. Die dabei entstehende Wärme kann über das Trägerteil 28 vorteilhaft abgeführt werden. Auf Grund der Drehung des Rotors 30 wird das Bauteil 56 mit dem Eingangsglied 44 in Drehbewegung versetzt. Über das Eingangsglied 44 wird das Getriebe 24 angetrieben, wodurch letztlich die Abtriebswelle 46 mit dem Drehglied 14 in Drehbewegung versetzt wird. Aus der Drehbewegung des Drehglieds 14 resultieren letztendlich die linearen Bewegungen der Greifbacken 16 entlang deren Führungen 20. Bei Richtungsumkehr der Bewegung der Greifbacken 16 wird der Motor entsprechend anders bestromt.

Über die Bremseinrichtung 50 kann der Motor bei Stillstand oder bei Erreichen von Hubendlagen der Greifbacken entsprechend gebremst werden. Ferner kann über die Messeinrichtung 54 der jeweilige Drehwinkel des Rotors 30, und damit des Drehglieds 14 und letztlich die Position der Backen 16 bestimmt werden.

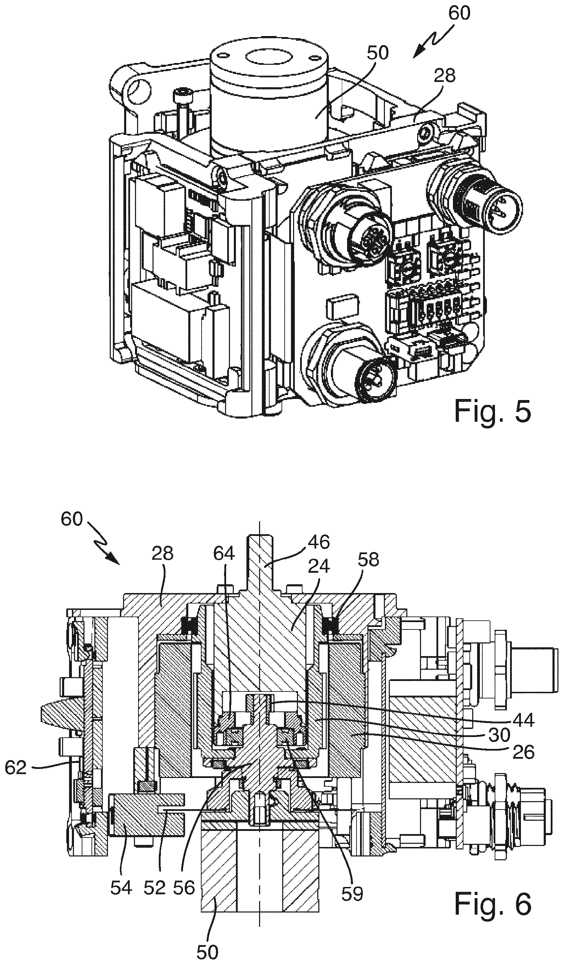

Die in den Figuren 4 bis 6 dargestellte Vormontagebaugruppe 60 ist zum Einbau in die Greifeinheit 10 gemäß den Figuren 1 bis 3 bestimmt. In Figur 6 ist das Trägerteil 28, an dem das Getriebe 24 mit der Abtriebswelle 46 angeordnet ist, deutlich zu erkennen. Am Trägerteil 28 sind ferner verschiedene Elektronikbaugruppen 62 vorgesehen, welche zur Ansteuerung des Elektromotors 22, zur Aufnahme von verschiedenen Testsignalen und zur Verarbeitung der Signale dienen, vorgesehen.

In Figur 5, die die Vormontagebaugruppe 60 gemäß Figur 4 von unten zeigt, ist deutlich die Bremseinrichtung 50 zu erkennen.

Der Schnitt gemäß Figur 6 durch die Vormontagebaugruppe 60 entspricht dem Schnitt gemäß Figur 3 um 180° verdreht, wobei entsprechende Bauteile mit entsprechenden Bezugszeichen gekennzeichnet sind.

In Figur 6 ist deutlich zu erkennen, dass zur Lagerung des Rotors 30 zwei Wälzlager 58, 59 vorgesehen sind. Das Lager 58 ist dabei im Bereich des offenen Endes des Rotormantels 34 vorgesehen und stützt sich einerseits am Trägerteil 28 und andererseits am Rotor 30 ab. Das Lager 58 ist folglich radial außen am Rotor vorgesehen. Das Lager 59 ist demgegenüber radial innen im Rotor 30 liegend vorgesehen, wobei sich einerseits am drehfest mit dem Rotor 30 verbundenen Bauteil 56 abstützt und andererseits an einem Ring 64, der an einem drehfest am Trägerteil 28 vorgesehenen Gehäuseabschnitt des Getriebes 24 vorgesehen ist.

## Patentansprüche

1. Greif- oder Schwenkeinheit (10), mit einem Gehäuse (12), mit einem im Gehäuse (12) drehbar angeordneten Drehglied (14), das mit wenigstens einer Greifbacke (16) oder einem Drehteller gekoppelt ist, mit einem im Gehäuse (12) vorgesehenen Elektromotor (22), der einen drehfesten Stator (26) und einen drehbar gelagerten Rotor (30) umfasst, mit einem mit dem Rotor (30) verbundenen Getriebe (24), welches eine mit dem Drehglied (14) gekoppelte Abtriebswelle (46) aufweist, wobei der Stator (26) den Rotor (30) in radialer Richtung umgibt und Wicklungen aufweist, wobei der Rotor (30) mit den Wicklungen zusammenwirkende Permanentmagnete umfasst und hohl ausgebildet ist, und wobei das Getriebe (24) in dem vom Rotor gebildeten Hohlraum (36) angeordnet ist, und wobei der Rotor (30) einen Rotorboden (32) und einen umlaufenden Rotormantel (34) aufweist,
**dadurch gekennzeichnet,**
**dass** am Rotorboden (32) ein in den vom Rotormantel (34) umschlossenen Hohlraum (36) ragender Wellenabschnitt (40) vorgesehen ist, der mit einem Eingangsglied (44) des Getriebes (24) zusammenwirkt, und
**dass** am Rotorboden (32) ein dem Hohlraum (36) abgewandter Wellenabschnitt (42) vorgesehen ist, der mit einer Bremseinrichtung (50) und/oder einer Drehwinkelmesseinrichtung (54) zusammenwirkt, wobei die beiden Wellenabschnitte (40, 42) entlang der Drehachse (38) des Elektromotors (22) verlaufend angeordnet sind.

2. Greif- oder Schwenkeinheit (10) nach Anspruch 1, **dadurch gekennzeichnet, dass** an dem dem Hohlraum (36) abgewandten Wellenabschnitt (42) ein Bremsflansch (48) vorgesehen ist, der mit einer gehäuseseitigen Bremseinrichtung (50) zusammenwirkt, und dass am Bremsflansch (48) eine Drehwinkelmessscheibe (52) vorgesehen ist, die mit der Drehwinkelmesseinrichtung (54) zur Messung des Drehwinkels des Rotors (30) zusammenwirkt.

3. Greif- oder Schwenkeinheit (10) nach Anspruch 2, **dadurch gekennzeichnet, dass** der Wellenabschnitt (40), der in den Hohlraum (36) ragt, einstückig mit dem Wellenabschnitt (42), der dem Hohlraum (36) abgewandt ist, ausgebildet ist..

4. Greif- oder Schwenkeinheit (10) nach einem der vorhergehenden Ansprüche, **dadurch gekennzeichnet, dass** das Getriebe (24) als mehrstufiges Umlaufrädergetriebe ausgebildet ist.

5. Greif- oder Schwenkeinheit (10) nach einem der vorhergehenden Ansprüche, **dadurch gekennzeichnet, dass** im Gehäuse (12) ein Trägerteil (28) vorgesehen ist, an dem der Stator (26) und/oder, drehfeste Teile des Getriebes (24) angeordnet sind und/oder an dem der Rotor (30) drehbar gelagert ist.

## Claims

1. A gripper unit or swivel unit (10), having a housing (12), having a rotary member (14), which is rotatably located in the housing (12) and is coupled to at least one gripper jaw (16) or a turntable, having an electric motor (22) which is provided in the housing (12) and includes a rotationally fixed stator (26) and a rotatably supported rotor (30), having a gear mechanism (24), which is connected to the rotor (30) and has an output shaft (46) coupled to the rotary member (14), wherein the stator (26) radially surrounds the rotor (30) and has windings, wherein the rotor (30) includes permanent magnets cooperating with the windings and is embodied as hollow, and wherein the gear mechanism (24) is located in the hollow chamber (36) formed by the rotor, and the rotor (30) has a rotor base (32) and an encompassing rotor casing (34),
**characterized in that**
on the rotor base (32), a shaft portion (40), protruding into the hollow chamber (36) enclosed by the rotor casing (34), is provided, which cooperates with an input member (44) of the gear mechanism (24), and
that a shaft portion (42) facing away from the hollow chamber (36) is provided on the rotor base (32) and cooperates with a braking device (50) and/or a rotary angle measuring device (54), and the two shaft portions (40, 42) are located extending along the rotary axis (38) of the electric motor (22).

2. The gripper unit or swivel unit (10) of claim 1, **characterized in that** on the shaft portion (42) facing away from the hollow chamber (36), a brake flange (48) is provided, which cooperates with a braking device (50) on the side toward the housing, and that a rotary angle measuring disk (52) is provided on the brake flange (48) and cooperates with the rotary angle measuring device (54) for measuring the rotary angle of the rotor (30).

3. The gripper unit or swivel unit (10) of claim 2, **characterized in that** the shaft portion (40) that protrudes into the hollow chamber (36) is embodied in one piece with the shaft portion (42) that faces away from the hollow chamber (36).

4. The gripper unit or swivel unit (10) of one of the foregoing claims, **characterized in that** the gear mechanism (24) is embodied as a multistage epicyclic gear set.

5. The gripper unit or swivel unit (10) of one of the foregoing claims, **characterized in that** in the housing (12), a supporting structure (28) is provided, on which the stator (26), rotationally fixed parts of the gear mechanism (24), is located and/or the rotor (30) is rotatably supported.

## Revendications

1. Unité de préhension ou pivotante (10), avec un boîtier (12), avec un organe rotatif (14) disposé dans le boîtier (12) de manière à pouvoir tourner, lequel organe rotatif est couplé avec au moins une mâchoire de préhension (16) ou avec un plateau tournant, avec un moteur électrique (22) prévu dans le boîtier (12), lequel moteur électrique comprend un stator (26) non rotatif et un rotor (30) logé de manière à pouvoir tourner, avec une transmission (24) qui est raccordée au rotor (30) et qui présente un arbre entraîné (46) couplé avec l'organe rotatif (14), où le stator (26) entoure le rotor (30) dans une direction radiale et présente des enroulements, où le rotor (30) comprend des aimants permanents qui interagissent avec les enroulements et de telle sorte que la structure dudit rotor est creuse et où la transmission (24) est disposée dans la cavité (36) formée par le rotor, et où le rotor (30) présente un fond de rotor (32) ainsi qu'une gaine de rotor (34) sur tout le pourtour,
**caractérisée en ce que**,
une section d'arbre (40), qui pénètre dans la cavité (36) entourée par la gaine de rotor (34), est prévue au fond du rotor (32), laquelle section d'arbre interagit avec un organe d'entrée (44) de la transmission (24) ; et
**caractérisée en ce que**,
une section d'arbre (42) se trouvant à l'opposé de la cavité (36) est prévue au fond de rotor (32), laquelle section d'arbre interagit avec un mécanisme de freinage (50) et/ou avec un mécanisme de mesure de l'angle de rotation (54), où les deux sections d'arbre (40, 42) sont disposées en s'étendant le long de l'axe de rotation (38) du moteur électrique (22).

2. Unité de préhension ou pivotante (10) selon la revendication 1, **caractérisée en ce qu'**une bride de frein (48) est prévue au niveau de la section d'arbre (42) se trouvant à l'opposé de la cavité (36), laquelle bride de frein (48) interagit avec un mécanisme de freinage (50) qui se trouve du côté du boîtier, et **caractérisée en ce qu'**un disque de mesure de l'angle de rotation (52) est prévu au niveau de la bride de frein, lequel disque de mesure de l'angle de rotation interagit avec le mécanisme de mesure de l'angle de rotation (54) en vue de la mesure de l'angle de rotation du rotor (30).

3. Unité de préhension ou pivotante (10) selon la revendication 2, **caractérisée en ce que** la section d'arbre (40) qui pénètre dans la cavité (36) est conçue d'une seule pièce avec la section d'arbre (42) qui se trouve à l'opposé de la cavité (36).

4. Unité de préhension ou pivotante (10) selon l'une des revendications précédentes, **caractérisée en ce que** la transmission (24) est conçue sous la forme d'une transmission à engrenages orbitaux à plusieurs niveaux.

5. Unité de préhension ou pivotante (10) selon l'une des revendications précédentes, **caractérisée en ce qu'**une pièce de support (28) est prévue dans le boîtier (12), au niveau de laquelle le stator (26) ainsi que des pièces non rotatives de la transmission (24) sont disposés et/ou au niveau de laquelle le rotor (30) est logé de manière à pouvoir tourner.
